# FASCICULE DE BREVET EUROPEEN

(11) **EP 2 571 810 B1**
(45) Date de publication et mention de la délivrance du brevet: **14.12.2016**
(21) Numéro de dépôt: 11727244.3
(22) Date de dépôt: 20.05.2011
(51) Int. Cl.: C01B 35/08, C01B 35/14

(54) **PROCEDE D'OBTENTION DE BORAZANE, CONVENANT POUR L'OBTENTION DE BORAZANE DE GRANDE PURETE, VOIRE DE TRES GRANDE PURETE**
FÜR DIE HERSTELLUNG VON HOCHREINEM UND ULTRAHOCHREINEM BORAZAN GEEIGNETES VERFAHREN ZUR GEWINNUNG VON BORAZAN
METHOD FOR OBTAINING BORAZANE, SUITABLE FOR OBTAINING HIGHLY PURE AND VERY HIGHLY PURE BORAZANE

(30) Priorité: 21.05.2010 FR 1053990
(43) Date de publication de la demande: 27.03.2013
(73) Titulaire: HERAKLES, 33185 Le Haillan (FR)
(72) Inventeur: GOUDON, Jean-Philippe, F-94700 Maisons-alfort (FR); RENOUARD, Joël, F-77630 Saint Martin En Biere (FR)
(74) Mandataire: Le Roux, Martine
(86) Numéro de dépôt international: PCT/FR2011/051149
(87) Numéro de publication internationale: WO 2011/144878

(56) Documents cités:
- WO-A1-2009/142956
- WO-A2-2007/120511
- US-A1- 2007 243 122
- P. VEERARAGHAVAN RAMACHANDRAN, PRAVIN D. GAGARE: "Preparation of Ammonia Borane in High Yield and Purity, Methanolysis and Regeneration", INORGANIC CHEMISTRY, vol. 46, 24 août 2007 (2007-08-24), pages 7810-7817, XP002616213,
- HU M G ET AL: "The thermal decomposition of ammonia borane", THERMOCHIMICA ACTA, ELSEVIER SCIENCE PUBLISHERS, AMSTERDAM, NL, vol. 23, no. 2, 1 avril 1978 (1978-04-01), pages 249-255, XP026552752, ISSN: 0040-6031, DOI: DOI:10.1016/0040-6031(78)85066-7 [extrait le 1978-04-01]
- "New synthetic approaches to ammonia-borane and its deuterated derivatives", J. INORG. NUCL. CHEM., vol. 39, 1977, pages 2147-2150,

## Description

La présente invention concerne l'obtention du borazane. Elle a plus précisément pour objet un procédé convenant pour l'obtention de borazane renfermant un faible, voire très faible, taux d'impuretés. Selon une variante avantageuse, ladite obtention comprend la mise en oeuvre successive de deux techniques de purification données et conduit à du borazane qui ne présente pas de décomposition exothermique à l'état solide, avant sa fusion.

La génération d'hydrogène à partir de composés solides est actuellement une des voies proposées pour alimenter en hydrogène les piles à combustible.

Il est ainsi connu d'utiliser le borazane comme solide précurseur dans la production d'hydrogène.

En effet, ledit borazane, de formule chimique BH₃NH₃, qui est obtenu sous la forme d'une poudre blanche cristalline, présente le potentiel unique de contenir 19,6 % d'hydrogène en masse. Il se positionne donc comme un candidat particulièrement intéressant pour le stockage solide de l'hydrogène, comme un produit de stockage solide de l'hydrogène potentiel particulièrement intéressant.

Les procédés de synthèse du borazane, BH₃NH₃, comprenant la réaction d'au moins un sel d'ammonium (choisi généralement parmi le chlorure d'ammonium, le sulfate d'ammonium, le carbonate d'ammonium, le formiate d'ammonium et leurs mélanges) avec au moins un borohydrure de métal alcalin et/ou alcalino-terreux (choisi généralement parmi le borohydrure de lithium, le borohydrure de sodium et leurs mélanges), dans le solvant tétrahydrofurane (THF), sont largement décrits dans la littérature. Ladite réaction est généralement mise en oeuvre entre un tel sel et un tel borohydrure. Le procédé le plus couramment utilisé consiste à faire réagir NaBH₄ et (NH₄)₂CO₃ dans du THF, pour la formation de BH₃NH₃, soluble dans ledit THF, et de NaCO₃(NH₄) et Na₂CO₃, non solubles, qui précipitent. A l'issue de la réaction, la solution de THF (renfermant donc BH₃NH₃ en solution) est filtrée pour en éliminer la plus grande partie des solides en suspension. Le solvant THF est ensuite évaporé. On récupère alors une poudre contenant essentiellement le borazane, mais aussi des impuretés telles que des réactifs résiduels (NaCO₃(NH₄), Na₂CO₃, par exemple), des borates, des complexes du borazane ((NH₂BH₂)ₙ, par exemple), du diammoniate diborane ((NH₃)₂BH₂)⁺BH₄⁻)....

A l'issue de tels procédés de synthèse, le borazane obtenu ne présente généralement pas une pureté supérieure à 95 % (en masse). Il en est ainsi des borazanes commercialisés à ce jour.

La publication, intitulée "Preparation of Ammonia Borane in High Yield and Purity, Methanolysis and Regeneration", dans Inorganic Chemistry, Vol. 46, N° 19, 2007 (pp 7810-7817), décrit toutefois un procédé d'obtention de ce type et énonce l'obtention d'un borazane de pureté supérieure à 98%. Le procédé décrit nécessite un taux de dilution élevé des produits solides dans le solvant THF (6 L de THF pour 37,83 g de borohydrure de sodium et 132,14 g de sulfate d'ammonium) peu propice à une mise en oeuvre à l'échelle industrielle. Par ailleurs, la Demanderesse n'a pu atteindre un taux de pureté du borazane supérieur à 90% en mettant en oeuvre ce procédé.

L'obtention de borazane présentant un haut degré de pureté est un réel problème technique, tout particulièrement en référence à l'utilisation précisée ci-dessus dudit borazane comme précurseur solide d'hydrogène, dans la mesure où les impuretés présentes ont une influence néfaste sur la tenue en température du produit. En effet, il est connu que lesdites impuretés sont responsables des faibles températures de décomposition (exothermique, à l'état solide) et de fusion du produit. Les borazanes commercialisés à ce jour, généralement obtenus par les procédés de synthèse évoqués ci-dessus, présentent ainsi :
- une décomposition exothermique à l'état solide débutant à partir de 40 - 55°C, suivie d'
- une fusion dans la plage de 104 - 115°C.

Ces basses températures les rendent peu aptes à être conservés dans un dispositif opérationnel dont les spécifications de tenue en température sont souvent sévères. Il est donc apparu vivement souhaitable de disposer de borazane présentant une pureté supérieure à 95 % (en masse).

L'art antérieur décrit des procédés d'obtention de borazane à haut degré de pureté, pour certains non dépourvus d'efficacité.

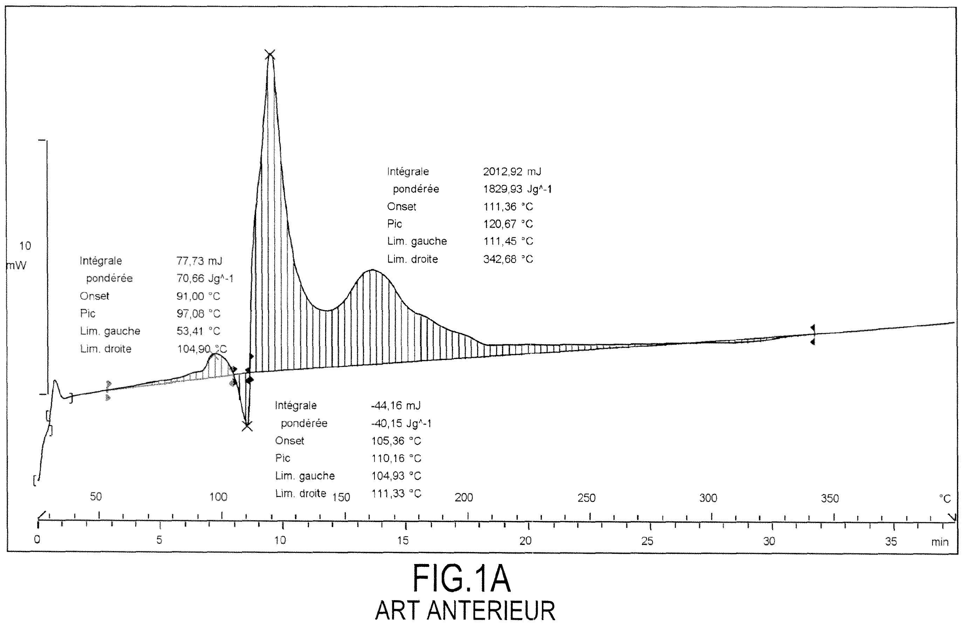

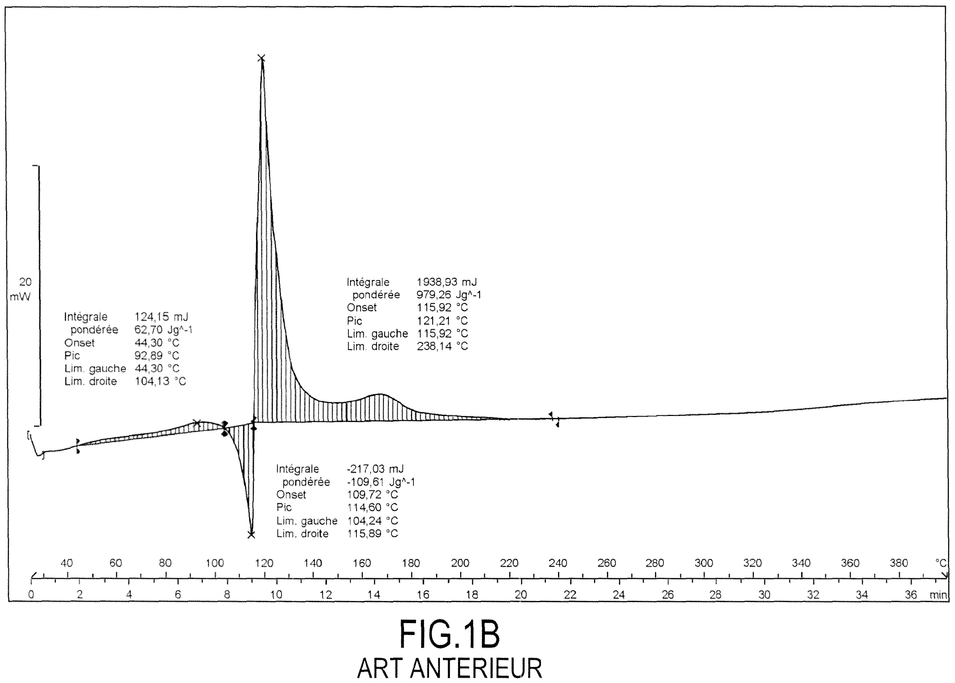

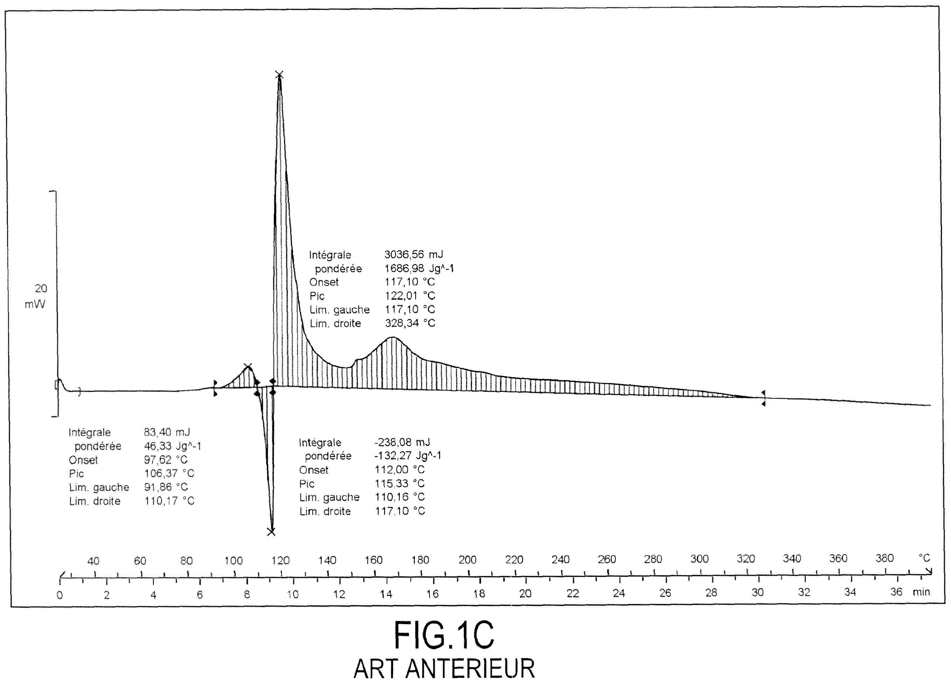

La demande de brevet WO-A-2007/106459 décrit une synthèse du borazane du type précisé ci-dessus qui inclut l'élimination du THF par évaporation et qui comprend en outre une extraction sélective du borazane produit à l'éther éthylique. Une telle extraction, malgré la faible solubilité du borazane dans l'éther éthylique, mise en oeuvre en continu, n'est pas dépourvue d'efficacité (voir les exemples I et II ci-après ainsi que les figures 1B et 1C attachées) mais sa mise en oeuvre, tout particulièrement à l'échelle industrielle, est difficile et d'un coût de revient élevé.

La publication, intitulée "The thermal décomposition of ammonia borane", dans Thermochimica Acta, 23 (1978) 249-255, présente des analyses de borazane purifié selon des procédés décrits dans "New synthetic approaches to ammonia-borane and its deuterated derivatives", J. inorg. nucl. Chem., 1977, Vol. 39, pp. 2147- 2150. La purification du *borazane, a priori* la plus efficace, est réalisée par sublimation sous vide à 60°C. Ce procédé de purification n'est pas industrialisable car il nécessite des installations de mise sous vide puissantes.

La demande de brevet WO 2007/120511 décrit la synthèse du borazane à partir d'un complexe amine borane. Un tel complexe est mis à réagir avec de l'ammoniac gazeux, ledit ammoniac gazeux étant mis à buller au travers d'une solution dudit complexe. La Demanderesse a évalué ce procédé selon les exemples cités mais n'a pas obtenu un rendement de synthèse de plus de 50%. Elle n'a pas non plus obtenu un borazane de pureté requise.

La demande de brevet WO 2009/142956 décrit la synthèse du borazane en deux étapes : une première étape d'obtention du borohydrure d'ammonium (par réaction d'un sel de borohydrure avec un sel d'ammonium dans de l'ammoniac liquéfié) puis une deuxième étape de décomposition dudit borohydrure d'ammonium dans un solvant éther. L'obtention du borohydrure d'ammonium est mise en oeuvre à basse température ou sous pression (i.e. dans des conditions de liquéfaction de l'ammoniac) et nécessite donc des installations de synthèse spécifiques limitant son exploitation à l'échelle industrielle.

L'art antérieur ne décrit donc pas de procédé d'obtention du borazane présentant un haut degré de pureté, facilement industrialisable, mis oeuvre dans des conditions de pression et de température ambiantes.

Certes, l'homme du métier connait, de manière générale, diverses méthodes de purification conventionnelles et notamment de telles méthodes de purification basées sur des précipitations sélectives. L'art antérieur n'a toutefois jamais fait mention de l'application de telles méthodes dans le contexte de l'obtention de borazane à haut degré de pureté. On conçoit l'existence d'un réel préjugé quant à l'existence de couples performants solvant/non solvant pour la mise en oeuvre de telles méthodes de précipitation sélectives, dans ce contexte, dans la mesure où les sous-produits de la synthèse conventionnelle du borazane (voir ci-dessus) (du type réactifs résiduels (tels par exemple, NaCO₃(NH₄), Na₂CO₃), complexes du borazane (par exemple de formule (NH₂BH₂)ₙ), borates, diammoniate diborane ((NH₃)₂BH₂)⁺BH₄⁻),...) présentent des caractéristiques de solubilité proches de celles du borazane.

L'homme du métier est donc toujours à ce jour à la recherche d'un procédé, applicable, à des coûts raisonnables, à l'échelle industrielle, pour l'obtention de borazane, avec un degré de pureté tel, qu'il présente une tenue en température (améliorée par rapport à celle des borazanes commercialisés à ce jour), compatible avec une utilisation opérationnelle comme source solide d'hydrogène.

En référence à ce problème technique, les inventeurs proposent un nouveau procédé pour l'obtention de borazane, ledit procédé convenant pour l'obtention de borazane renfermant un faible taux d'impuretés. Ledit procédé convient notamment pour fournir du borazane renfermant au maximum 2 % en masse d'impuretés, voire moins de 1 % en masse d'impuretés et ne présentant alors plus de décomposition exothermique à l'état solide, avec une plage de température du pic endothermique de fusion au-delà de 110°C. Ledit procédé comprend une (précipitation sélective avec un non solvant particulier) ou deux (précipitation sélective avec un non solvant particulier + dissolution sélective avec un solvant particulier) étapes de purification spécifiques du borazane obtenu par réaction entre au moins un sel d'ammonium et au moins un borohydrure de métal alcalin et/ou alcalino-terreux dans le THF. Ladite (unique) étape de purification ou ladite première étape (des deux étapes) de purification du procédé de l'invention peut être mise en oeuvre après la synthèse, le borazane synthétisé étant conservé dans le milieu réactionnel (sans en être isolé), ou après récupération du borazane ainsi synthétisé (par exemple sur du borazane commercial ainsi synthétisé). La(Les) purification(s) spécifique(s) proposée(s) selon l'invention s'est(se sont) révélée(s) de manière surprenante, très efficace(s) pour l'élimination des impuretés présentes à l'issue de la synthèse rappelée (par réaction entre au moins un sel d'ammonium et au moins un borohydrure de métal alcalin et/ou alcalino-terreux).

Selon son premier objet, la présente invention concerne donc un procédé pour l'obtention de borazane. Ledit procédé, de façon caractéristique, comprend la mise en oeuvre des étapes successives ci-après :
a) l'obtention d'une solution de borazane dans un solvant constitué de tétrahydrofurane renfermant moins de 100 ppm d'eau, avantageusement moins de 10 ppm d'eau ; ledit borazane ayant été synthétisé par réaction d'au moins un sel d'ammonium avec au moins un borohydrure de métal alcalin et/ou alcalino-terreux dans ledit solvant ou ledit borazane ayant été dissous dans ledit solvant, après avoir été synthétisé par réaction d'au moins un sel d'ammonium avec au moins un borohydrure de métal alcalin et/ou alcalino-terreux dans du tétrahydrofurane renfermant moins de 100 ppm d'eau, avantageusement moins de 10 ppm d'eau ;
b) la précipitation du borazane par addition à ladite solution d'un non solvant du borazane, renfermant moins de 100 ppm d'eau, avantageusement moins de 10 ppm d'eau, et choisi parmi les solvants chlorés, les solvants fluorés, les alcanes linéaires, ramifiés et cycliques, et leurs mélanges ;
c) la récupération, avantageusement par filtration, dudit borazane précipité ;
d) l'éventuel séchage dudit borazane précipité récupéré ; (ledit borazane précipité récupéré, éventuellement séché, renfermant moins d'impuretés que le borazane dans ladite solution de borazane).

Il comprend éventuellement, en outre (pour l'obtention du borazane renfermant encore moins d'impuretés) :
e) la solubilisation à chaud, à une température inférieure à la température de décomposition du borazane, dudit borazane précipité récupéré, avantageusement séché, dans un solvant de la famille des alcools, présentant une masse molaire supérieure ou égale à 60 g/mol et renfermant moins de 100 ppm d'eau, avantageusement moins de 10 ppm d'eau ;
f) l'élimination à chaud, avantageusement par filtration, des impuretés insolubles dans ledit solvant ;
g) la précipitation du borazane solubilisé dans ledit solvant par refroidissement ;
h) la récupération, avantageusement par filtration, du borazane précipité ; et
i) l'éventuel séchage dudit borazane précipité récupéré.
   - Le procédé de l'invention est mis en oeuvre sur du borazane préparé par la voie de synthèse indiquée. Il est plus précisément mis en oeuvre sur une solution renfermant un tel borazane. Cette solution est une solution qui ne renferme pas de solide en suspension et qui renferme du THF à titre de solvant. Cette solution est susceptible d'exister selon deux variantes.

Selon une première variante, elle dérive directement du, voire consiste (quasiment) en le, milieu réactionnel dans lequel ledit borazane a été synthétisé. Selon cette première variante, le procédé de l'invention est mis en oeuvre après la synthèse, voire directement à l'issue de ladite synthèse (le borazane synthétisé n'ayant, en tout état de cause, pas été isolé). Dans le cadre de cette première variante, l'obtention de la solution de borazane comprend, avantageusement :
a₁) la synthèse du borazane, par réaction, dans le tétrahydrofurane renfermant au maximum 100 ppm d'eau, avantageusement au maximun 10 ppm d'eau, d'au moins un sel d'ammonium avec au moins un borohydrure de métal alcalin et/ou alcalino-terreux, et
a₂) l'élimination, avantageusement par filtration, des solides du milieu réactionnel.

Elle comprend très avantageusement, outre lesdites deux étapes a₁ et a₂ ci-dessus, l'étape a₃ ci-après :
a₃) la concentration, avantageusement par évaporation d'une partie du solvant, du milieu réactionnel filtré.

Cette étape de concentration permet de minimiser ensuite la quantité de non solvant nécessaire à la précipitation du borazane.

Selon une seconde variante, la solution de départ est constituée à partir de borazane solide (préalablement synthétisé par la réaction précisée et isolé, à l'état de poudre), par mise en solution dudit borazane solide (par "re-dissolution" de celui-ci) dans du THF. Ledit borazane solide peut avoir été stocké, plus ou moins longtemps, à l'état de poudre. Il peut notamment s'agir de borazane commercial.

Le THF dans lequel se trouve dissous le borazane à purifier selon l'invention est sec, c'est-à-dire qu'il renferme moins de 100 ppm d'eau (avantageusement moins de 10 ppm d'eau). L'homme du métier comprend aisément cet impératif, quant à la "non présence" d'eau dans la solution de départ mais aussi tout au long du procédé, dans la mesure où l'eau est susceptible de générer des impuretés, telles que des dérivés de l'acide borique.
▪ Le borazane en solution est purifié par précipitation sélective à l'aide d'un non solvant. Il est du mérite des inventeurs d'avoir montré que cette méthode de purification, avec un non solvant de nature adéquate, est efficace dans ce contexte particulier.

Le non solvant sélectif selon l'invention est choisi, comme indiqué ci-dessus, parmi les solvants chlorés, tel le dichlorométhane et le 1,2-dichloroéthane, les solvants fluorés, tels les hydrofluoroéthers (le 2-trifluorométhyl-3-éthoxydodécafluorohexane, par exemple), les alcanes linéaires, ramifiés et cycliques, tel le cyclohexane, (lesdits alcanes étant évidemment liquides à la température de mise en oeuvre du procédé, généralement la température ambiante), et leurs mélanges. Ledit non solvant consiste avantageusement en le dichlorométhane.

Le borazane précipité est récupéré. Il est avantageusement séché. Un tel séchage permet d'éliminer le THF résiduel, susceptible de contenir des impuretés.

A l'issue des étapes a) à c), voire a) à d), telles que précisées ci-dessus, on obtient du borazane purifié par rapport à celui en solution dans la solution de départ.

Il est notamment possible d'obtenir ainsi du borazane présentant une pureté comprise entre 98 et 99 % en masse. Ce taux massique en borazane, contenu dans la poudre de borazane obtenue, est supérieur à celui des produits commercialement disponibles (on a vu que lesdits produits commerciaux présentent généralement un taux massique en borazane inférieur ou égal à 95 %).

Notons incidemment que des purifications décrites dans l'art antérieur permettent elles aussi d'obtenir de tels degrés de pureté. Toutefois, on a vu que les technologies en cause sont difficiles à exploiter industriellement. L'homme du métier a d'ores et déjà compris qu'il est plus aisé de mettre industriellement en oeuvre une précipitation avec les couples solvant/non solvant sélectionnés selon l'invention.

Le procédé de l'invention, convenant pour l'obtention de borazane renfermant un faible taux d'impuretés (notamment ≤ 2 % en masse) et présentant donc une température de début de décomposition exothermique à l'état solide plus élevée que celle du produit non purifié (notamment ≥ 85°C ), peut tout à fait ne renfermer que l'unique étape de purification décrite ci-dessus (étape b), c'est-à-dire consister essentiellement en la succession des étapes a) à c), voire a) à d), précisées ci-dessus. On a compris que la mise en oeuvre de l'étape d) est avantageuse.
▪ Pour l'obtention du borazane encore plus pur, les inventeurs ont montré l'intérêt qu'il y a à associer une deuxième étape spécifique de purification (étape e) à la (première) étape de purification (étape b ci-dessus).

Ainsi, le procédé de l'invention comporte-t-il, avantageusement, outre lesdites étapes a) à c), voire a) à d), ci-dessus, les étapes e) à h), voire e) à i). Avantageusement, ledit procédé consiste donc essentiellement en la mise en oeuvre desdites étapes successives a) à c), éventuellement d), e) à h) et éventuellement i). On a compris que la mise en oeuvre des étapes éventuelles de séchage (d) et i)) est généralement opportune.

Ainsi, dans le cadre de cette variante, le borazane purifié selon l'étape b) ci-dessus l'est à nouveau selon l'étape e). Ladite étape e) est une dissolution sélective.

La nature du solvant est critique. Celui-ci est, comme indiqué ci-dessus, choisi parmi les alcools présentant une masse moléculaire supérieure ou égale à 60 g/mol (on écarte ainsi le méthanol et l'éthanol avec lesquels le borazane réagit à chaud) et renfermant moins de 100 ppm, avantageusement moins de 10 ppm, d'eau. Il est avantageusement choisi parmi le butanol, le *t*-butanol et l'isopropanol. Il consiste très avantageusement en l'isopropanol.

La solubilisation est mise en oeuvre à chaud, typiquement à une température comprise entre 70 et 80°C.

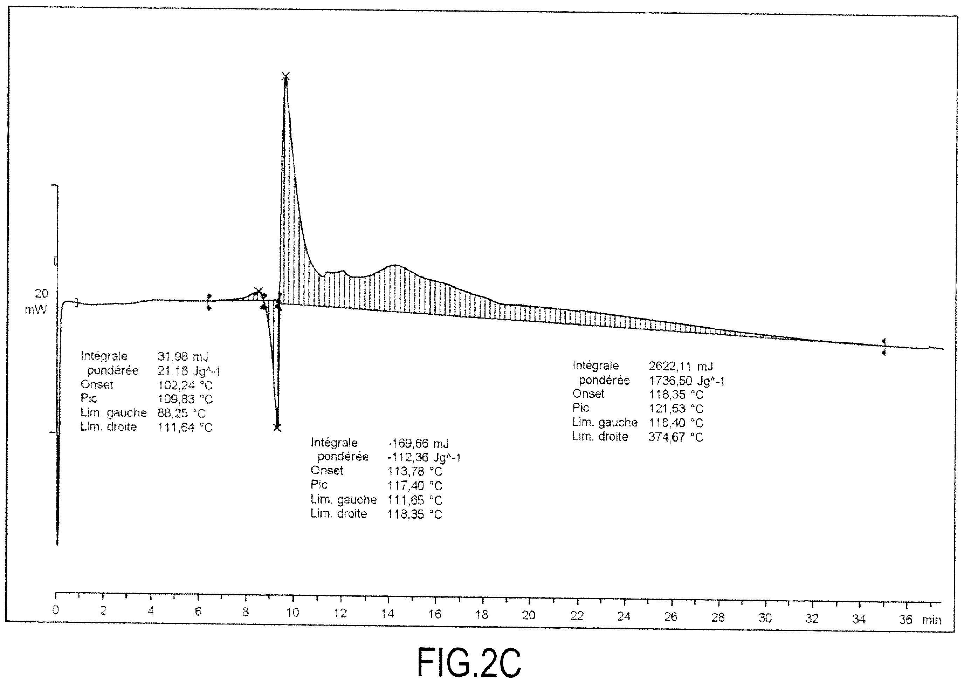

Il est du mérite des inventeurs d'avoir mis en évidence l'intérêt d'associer cette seconde purification, avec sélection de solvant adéquate, à la première purification décrite ci-dessus. Ladite seconde purification, mise en oeuvre avec d'autres solvants, tel le méthyl-*t-*butyléther (MTBE), n'est pas efficace (voir l'exemple 3 ci-après ainsi que la figure 2C attachée). Ladite seconde purification, mise en oeuvre sur du borazane n'ayant pas été soumis à ladite première purification, n'est pas efficace non plus.

On rappelle incidemment ici que le procédé de l'invention s'inscrit dans la lignée d'une synthèse du borazane par réaction d'au moins un sel d'ammonium avec au moins un borohydrure de métal alcalin et/ou alcalino-terreux (ledit au moins un borohydrure de métal alcalin et/ou alcalino-terreux est généralement choisi parmi le borohydrure de lithium, le borohydrure de sodium, le borohydrure de calcium et leurs mélanges). Avantageusement, ledit au moins un sel d'ammonium est choisi parmi le chlorure d'ammonium, le sulfate d'ammonium, le carbonate d'ammonium, le formiate d'ammonium et leurs mélanges et/ou, avantageusement et, ledit au moins un borohydrure de métal alcalin et/ou alcalino-terreux est choisi parmi le borohydrure de lithium, le borohydrure de sodium et leurs mélanges.

Très avantageusement, ledit au moins un sel d'ammonium consiste en le carbonate d'ammonium et ledit au moins un borohydrure de métal alcalin et/ou alcalino-terreux consiste en le borohydrure de sodium.

Le borazane obtenu à l'issue de la mise en oeuvre du procédé de l'invention comportant la seconde étape de purification est un produit particulièrement intéressant.

Il comprend moins de 1 % en masse d'impuretés, généralement entre 0,1 et moins de 1 % en masse d'impuretés. Il ne présente pas de décomposition exothermique à l'état solide et sa plage de température du pic endothermique de fusion est au-delà de 110°C.

L'homme du métier, en référence au problème technique exposé dans l'introduction du présent texte, a parfaitement compris l'intérêt du procédé de l'invention et celui du borazane purifié obtenu à l'issue de sa mise en oeuvre. Ledit borazane purifié est plus stable thermiquement et présente une température de fusion plus élevée que celle des borazanes commerciaux. On relève tout particulièrement l'intérêt du borazane obtenu qui ne présente pas de décomposition exothermique à l'état solide.

On se propose maintenant d'illustrer l'invention, de façon nullement limitative, par les figures annexées et les exemples ci-après.

Lesdites figures annexées sont des thermogrammes obtenus par calorimétrie différentielle à balayage (DSC : Differential Scanning Calorimetry). Cette méthode d'analyse a été mise en oeuvre de façon conventionnelle (voir la norme NF EN ISO 11357-1).
La figure 1A est le thermogramme du borazane (produit A) commercialisé par la société Aldrich (lot 12722AJ).
La figure 1B est le thermogramme du borazane (produit B) obtenu à l'issue de sa synthèse, après évaporation du solvant (THF) du milieu réactionnel (voir l'exemple I ci-après).
La figure 1C est le thermogramme du borazane (produit C) obtenu à l'issue de sa synthèse, après évaporation du solvant (THF) du milieu réactionnel et après purification par extraction en continu à l'éther éthylique (voir l'exemple II ci-après).
La figure 2A est le thermogramme du borazane obtenu selon une variante (avantageuse) de mise en oeuvre du procédé de l'invention comprenant la synthèse dudit borazane et sa purification par précipitation avec le non solvant dichlorométhane (voir l'exemple 1 de l'invention).
La figure 2B est le thermogramme du borazane obtenu selon une variante (très avantageuse) de mise en oeuvre du procédé de l'invention comprenant la synthèse dudit borazane et deux purifications successives de celui-ci : 1) par précipitation avec le non solvant dichlorométhane, puis 2) par extraction avec l'isopropanol (voir l'exemple 2 de l'invention).
La figure 2C est le thermogramme du borazane obtenu selon une variante de mise en oeuvre du procédé de l'invention comprenant la synthèse dudit borazane et deux purifications successives de celui-ci : 1) par précipitation avec le non solvant dichlorométhane, puis 2) par extraction avec le MTBE (voir l'exemple 3 ci-après). Il se confirme que ladite purification avec le MTBE est guère opportune.

Les caractéristiques desdits thermogrammes sont résumées dans le tableau 1 ci-après.

**Tableau 1**

| Borazane | Résultats de DSC | |
|---|---|---|
| | Température de début de décomposition exothermique à l'état solide | Plage de température du pic endothermique de fusion |
| Produit A | 53°C | 105 - 111°C |
| Produit B | 44°C | 104 - 116°C |
| Produit C | 92°C | 110 - 117°C |
| Ex. 1 | 87°C | 111 - 118°C |
| Ex. 2 | / | 111 - 120°C |
| Ex. 3 | 88°C | 112 - 118°C |

Les produits A et B ainsi que ceux obtenus aux exemples 1 et 2 ont aussi été analysés par résonance magnétique nucléaire, pour évaluer leur pureté. Les résultats figurent dans le tableau 2 ci-après.

### Exemple I

### a) Synthèse et_élimination des solides du milieu réactionnel

Dans un réacteur de 4 litres, équipé de moyens d'agitation, d'un condenseur et mis sous ciel d'argon, sont introduits 288 g de carbonate d'ammonium et 4 litres de tétrahydrofurane sec (0,0005 % d'eau).

Sur ce mélange, sont introduits 112 g de borohydrure de sodium préalablement traité 2 h en étuve à 140 °C.

Le milieu est laissé 12 h sous agitation à une température de 40 °C.

Après ce temps, le milieu est filtré pour éliminer les réactifs non consommés ainsi que le carbonate de sodium formé.

### b) Evaporation du solvant

La solution de borazane dans le tétrahydrofurane obtenue est de nouveau introduite dans le réacteur. Le solvant (THF) est évaporé, le borazane (produit B) est alors récupéré.

Le thermogramme dudit borazane est montré sur la figure 1B annexée. Il inclut une décomposition exothermique à l'état solide à basse température (44 °C). Ses caractéristiques ont été rappelées dans le tableau 1 ci-dessus.

Ledit borazane (produit B) a aussi été analysé par résonance magnétique nucléaire (¹H RMN avec étalonnage interne) pour évaluer sa pureté. Les résultats figurent dans le tableau 2 ci-dessous.

### Exemple II

### a) Synthèse et élimination des solides du milieu réactionnel

On répète l'étape a) de l'exemple I ci-dessus.

### b) Extraction_à l'éther éthylique

Le borazane brut solide, récupéré après évaporation du THF, est introduit dans un extracteur de type Soxhlet. L'extraction est réalisée par un reflux d'éther éthylique conformément à l'enseignement de la demande WO 2007/106459. L'extraction est mise en oeuvre à 35 °C pendant 12 h.

### c) Evaporation du solvant

Après l'extraction, l'éther éthylique est évaporé et le borazane est récupéré puis séché et enfin stocké sous atmosphère d'argon.

Le thermogramme du borazane extrait (produit C) est montré sur la figure 1C annexée. Il inclut une décomposition exothermique à l'état solide à une température beaucoup plus élevée que celle de la décomposition exothermique des produis A et B. Ses caractéristiques ont été rappelées dans le tableau 1 ci-dessus.

### Exemple 1

### a) Synthèse et élimination des solides du milieu réactionnel

On répète l'étape a) de l'exemple I ci-dessus.

### b) Purification selon l'invention

La solution de borazane dans le tétrahydrofurane est de nouveau introduite dans le réacteur et est ensuite partiellement évaporée jusqu'à l'obtention d'un pied de cuve de 400 ml, représentant 10 % de la totalité du THF introduit au départ de la synthèse.

Sont ajoutés alors 2,5 litres de dichlorométhane sec (0,005 % d'eau) dans le réacteur sous vive agitation. Il y a précipitation du borazane qui est filtré puis séché en étuve sous vide à 20 °C durant 12 h.

Une masse de 70 g de poudre de borazane est récupérée. Le rendement du procédé est ainsi supérieur à 70 %.

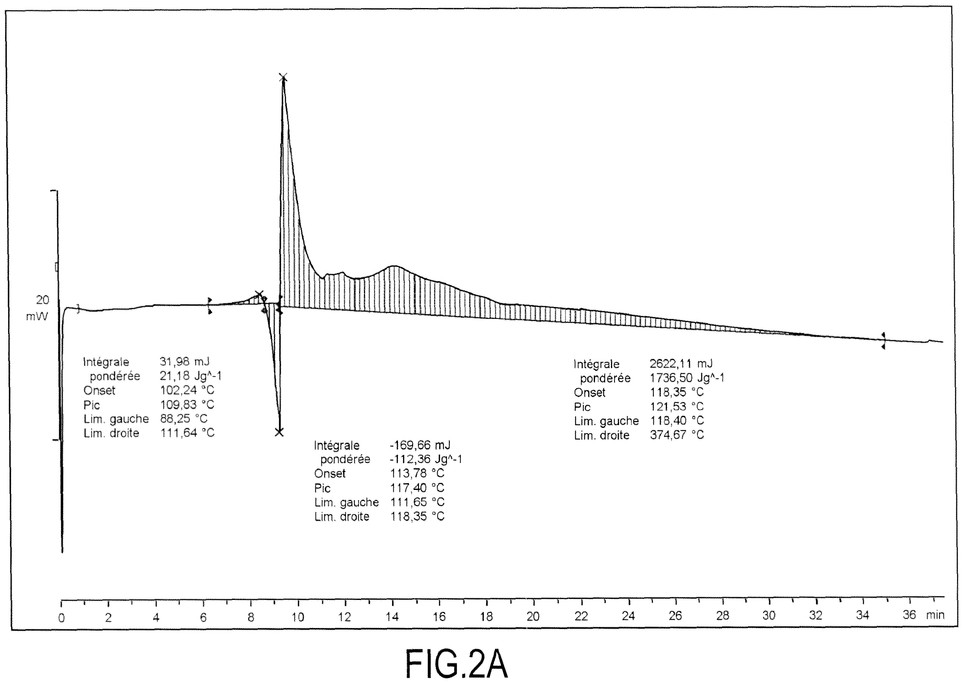

Le thermogramme de ladite poudre est montré sur la figure 2A annexée. Il inclut une décomposition exothermique à l'état solide à une température beaucoup plus élevée que celle de ladite décomposition exothermique des produis A et B. Ses caractéristiques ont été rappelées dans le tableau 1 ci-dessus.

Ladite poudre a aussi été analysée par résonance magnétique nucléaire (¹H RMN avec étalonnage interne) pour en évaluer la pureté. Les résultats figurent dans le tableau 2 ci-dessous.

### Exemple 2

### a) Synthèse et élimination des solides du milieu réactionnel

On répète l'étape a) de l'exemple I ci-dessus.

### b) Purification selon l'invention

On répète l'étape b) de l'exemple 1 ci-dessus.

### c) Seconde purification selon l'invention

La masse de 70 g de poudre de borazane récupérée est alors dissoute dans 0,7 litre d'isopropanol sec (0,0005 % d'eau) porté à une température de 76°C.

La solution est filtrée à chaud pour éliminer les insolubles et refroidie lentement jusqu'à une température de -10°C afin de faire précipiter le borazane contenu dans la solution.

La solution est filtrée afin de récupérer le précipité constituant une poudre de borazane de très grande pureté. Ladite poudre est séchée 24 h en étuve sous vide à 35 °C.

Une masse de 60 g de poudre est récupérée. Le rendement du procédé (englobant les deux étapes de purification) est ainsi supérieur à 65 %.

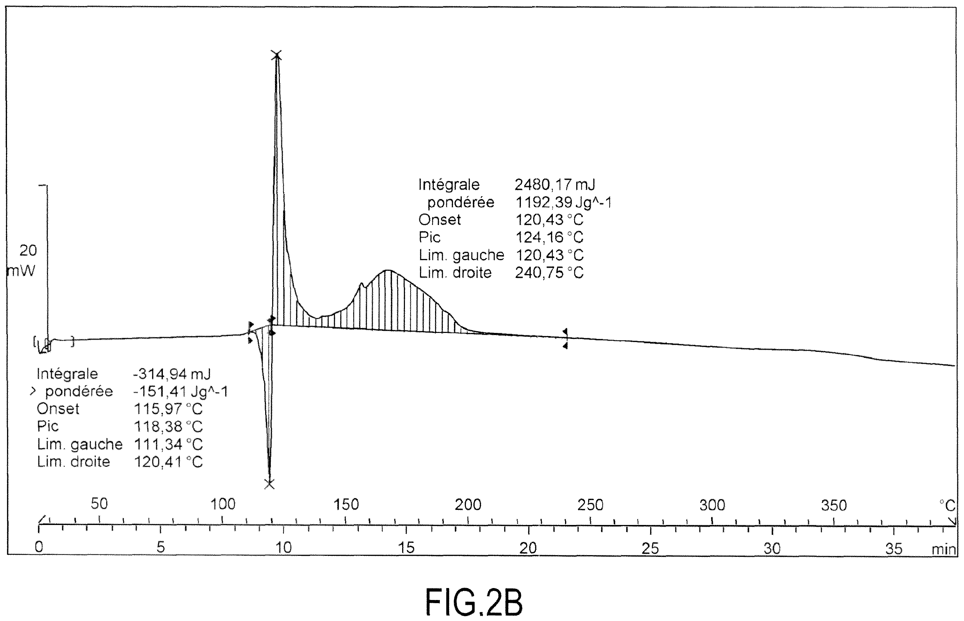

Le thermogramme de ladite poudre est montré sur la figure 2B annexée. Il n'inclut pas de décomposition exothermique à l'état solide. Ses caractéristiques ont été rappelées dans le tableau 1 ci-dessus.

Ladite poudre a aussi été analysée par résonance magnétique nucléaire (¹H RMN avec étalonnage interne), pour évaluer sa pureté. Les résultats figurent dans le tableau 2 ci-dessous.

Ledit tableau 2 confirme les hauts niveaux de pureté des borazanes préparés selon l'invention. Ces hauts niveaux de pureté expliquent les résultats particulièrement intéressants en termes de tenue thermique (voir les thermogrammes annexés).

**Tableau 2**

| | Pourcentage massique | | | |
|---|---|---|---|---|
| Borazane | BH₃NH₃ | NH₃/NH₃ dans BH₃NH₃ pur | BH₃/BH₃ dans BH₃NH₃ pur | H |
| Produit A | 93,5 % | 97,3 % | 89,2 % | 18 % |
| Produit B | 89,4 % | 91,9 % | 87% | 17,2 % |
| Ex. 1 | 98,9 % | 98,1 % | 99,8 % | 19,1 % |
| Ex. 2 | 99,8 % | 100 % | 99,7 % | 19,3 % |

### Exemple 3

### a) Synthèse et élimination des solides du milieu réactionnel

On répète l'étape a) de l'exemple I ci-dessus.

### b) Purification selon l'invention

On répète l'étape b) de l'exemple 1 ci-dessus.

### c) "Seconde purification"

On répète l'étape c) de l'exemple 2 ci-dessus en substituant le méthyl-*t*-butyl éther (MTBE, sec, renfermant 50 ppm d'eau) à l'isopropanol.

Le thermogramme de la poudre obtenue est montré sur la figure 2C annexée. Il inclut une décomposition exothermique à l'état solide, à une température beaucoup plus élevée que celle de ladite décomposition thermique des produits A et B. Ses caractéristiques ont été rappelées dans le tableau 1 ci-dessus.

Cet exemple montre qu'une seconde étape de purification, par solubilisation du borazane obtenu à l'issu de la première étape de purification (par précipitation avec un non solvant), n'a pas forcément d'effet. La nature du solvant de solubilisation apparaît critique.

## Revendications

1. Procédé pour l'obtention de borazane , **caractérisé en ce qu'**il comprend la mise en oeuvre des étapes successives ci-après :
a) l'obtention d'une solution de borazane dans un solvant constitué de tétrahydrofurane renfermant moins de 100 ppm d'eau, avantageusement moins de 10 ppm d'eau ; ledit borazane ayant été synthétisé par réaction d'au moins un sel d'ammonium avec au moins un borohydrure de métal alcalin et/ou alcalino-terreux dans ledit solvant ou ledit borazane ayant été dissous dans ledit solvant, après avoir été synthétisé par réaction d'au moins un sel d'ammonium avec au moins un borohydrure de métal alcalin et/ou alcalino-terreux dans du tétrahydrofurane renfermant moins de 100 ppm d'eau, avantageusement moins de 10 ppm d'eau ;
b) la précipitation du borazane par addition à ladite solution d'un non solvant du borazane, renfermant moins de 100 ppm d'eau, avantageusement moins de 10 ppm d'eau, et choisi parmi les solvants chlorés, les solvants fluorés, les alcanes linéaires, ramifiés et cycliques, et leurs mélanges ;
c) la récupération, avantageusement par filtration, dudit borazane précipité ;
d) l'éventuel séchage dudit borazane précipité récupéré.

2. Procédé selon la revendication 1, **caractérisé en ce qu'**il comprend, en outre :
e) la solubilisation à chaud, à une température inférieure à la température de décomposition du borazane, dudit borazane précipité récupéré, avantageusement séché, dans un solvant de la famille des alcools, présentant une masse molaire supérieure ou égale à 60 g/mol et renfermant moins de 100 ppm d'eau, avantageusement moins de 10 ppm d'eau ;
f) l'élimination à chaud, avantageusement par filtration, des impuretés insolubles dans ledit solvant ;
g) la précipitation du borazane solubilisé dans ledit solvant par refroidissement ;
h) la récupération, avantageusement par filtration, du borazane précipité ; et
i) l'éventuel séchage dudit borazane précipité récupéré.

3. Procédé selon la revendication 1 ou 2, **caractérisé en ce qu'**il comprend, pour l'obtention de ladite solution de borazane :
a₁) la synthèse du borazane, par réaction, dans du tétrahydrofurane renfermant moins de 100 ppm d'eau, avantageusement moins de 10 ppm d'eau, d'au moins un sel d'ammonium avec au moins un borohydrure de métal alcalin et/ou alcalino-terreux, et
a₂) l'élimination, avantageusement par filtration, des solides du milieu réactionnel.

4. Procédé selon la revendication 3, **caractérisé en ce qu'**il comprend, en outre, pour l'obtention de ladite solution de borazane :
a₃) la concentration, avantageusement par évaporation d'une partie du solvant, dudit milieu réactionnel filtré.

5. Procédé selon l'une quelconque des revendications 1 à 4, **caractérisé en ce que** ledit non solvant consiste en le dichlorométhane.

6. Procédé selon l'une quelconque des revendications 1, 3 à 5, **caractérisé en ce qu'**il consiste essentiellement en la mise en oeuvre des étapes successives a) à c) et éventuellement d).

7. Procédé selon l'une quelconque des revendications 2 à 5, **caractérisé en ce qu'**il comprend, voire **en ce qu'**il consiste essentiellement en, la mise en oeuvre des étapes successives a) à c), éventuellement d), et e) à h) et éventuellement i).

8. Procédé selon la revendication 7, **caractérisé en ce que** ledit solvant de la famille des alcools est choisi parmi le butanol, le *t*-butanol et l'isopropanol ; **en ce que** ledit solvant consiste avantageusement en l'isopropanol.

9. Procédé selon la revendication 7 ou 8, **caractérisé en ce que** ladite solubilisation à chaud est mise en oeuvre à une température comprise entre 70 et 80°C.

10. Procédé selon l'une quelconque des revendications 1 à 9, **caractérisé en ce que** ledit au moins un sel d'ammonium est choisi parmi le chlorure d'ammonium, le sulfate d'ammonium, le carbonate d'ammonium, le formiate d'ammonium et leurs mélanges et/ou, avantageusement et, ledit au moins un borohydrure de métal alcalin et/ou alcalino-terreux est choisi parmi le borohydrure de lithium, le borohydrure de sodium et leurs mélanges.

11. Procédé selon l'une quelconque des revendications 1 à 10, **caractérisé en ce que** ledit au moins un sel d'ammonium consiste en le carbonate d'ammonium et ledit au moins un borohydrure de métal alcalin et/ou alcalino-terreux consiste en le borohydrure de sodium.

## Patentansprüche

1. Verfahren zur Herstellung von Borazan, **dadurch gekennzeichnet, dass** es den Einsatz der nachstehenden aufeinanderfolgenden Schritte umfasst:
a) die Herstellung einer Borazan-Lösung in einem Lösungsmittel, bestehend aus Tetrahydrofuran, das weniger als 100 ppm Wasser, vorteilhafterweise weniger als 10 ppm Wasser enthält, wobei das Borazan durch Reaktion mindestens eines Ammoniumsalzes mit mindestens einem Borhydrid von alkalischem und/oder erdalkalischem Metall in dem Lösungsmittel synthetisiert wurde, oder wobei das Borazan in dem Lösungsmittel aufgelöst wurde, nachdem es durch Reaktion mindestens eines Ammoniumsalzes mit mindestens einem Borhydrid von alkalischem und/oder erdalkalischem Metall in Tetrahydrofuran, umfassend weniger als 100 ppm Wasser, vorteilhafterweise weniger als 10 ppm Wasser, synthetisiert wurde,
b) die Ausfällung des Borazans durch Hinzufügen eines Nicht-Lösungsmittels des Borazans zu der Lösung, das weniger als 100 ppm Wasser, vorteilhafterweise weniger als 10 ppm Wasser, enthält und unter den chlorhaltigen Lösungsmitteln, fluorhaltigen Lösungsmitteln, den linearen, verzweigten und zyklischen Alkanen und ihren Gemischen ausgewählt ist,
c) die Wiedergewinnung des ausgefällten Borazans vorteilhafterweise durch Filterung,
d) die eventuelle Trocknung des wiedergewonnenen, ausgefüllten Borazans.

2. Verfahren nach Anspruch 1, **dadurch gekennzeichnet, dass** es ferner umfasst:
e) die Heiß-Solubilisierung des wiedergewonnenen, ausgefällten, vorzugsweise getrockneten Borazans bei einer Temperatur unter der Zersetzungstemperatur des Borazans in einem Lösungsmittel aus der Familie der Alkohole mit einer Molmasse größer oder gleich 60 g/mol und umfassend weniger als 100 ppm Wasser, vorteilhafterweise weniger als 10 ppm Wasser,
f) die Heiß-Beseitigung der in dem Lösungsmittel unlöslichen Verunreinigungen, vorteilhafterweise durch Filterung,
g) die Ausfällung des in dem Lösungsmittel solubilisierten Borazans durch Kühlen,
h) die Wiedergewinnung des ausgefällten Borazans, vorteilhafterweise durch Filterung, und
i) eventuell die Trocknung des wiedergewonnenen, ausgefällten Borazans.

3. Verfahren nach Anspruch 1 oder 2, **dadurch gekennzeichnet, dass** es für den Erhalt der Borazan-Lösung umfasst:
a₁) die Synthese des Borazans durch Reaktion in Tetrahydrofuran, das weniger als 100 ppm Wasser, vorteilhafterweise weniger als 10 ppm Wasser, enthält, mindestens eines Ammoniumsalzes mit mindestens einem Borhydrid von alkalischem und/oder erdalkalischem Metall, und
a₂) die Beseitigung der Feststoffe aus dem Reaktionsmedium, vorteilhafterweise durch Filterung.

4. Verfahren nach Anspruch 3, **dadurch gekennzeichnet, dass** es ferner für den Erhalt der Borazan-Lösung umfasst:
a₃) die Konzentration des gefilterten Reaktionsmediums, vorteilhafterweise durch Verdampfung eines Teils des Lösungsmittels.

5. Verfahren nach einem der Ansprüche 1 bis 4, **dadurch gekennzeichnet, dass** das Nicht-Lösungsmittel in Dichlormethan besteht.

6. Verfahren nach einem der Ansprüche 1, 3 bis 5, **dadurch gekennzeichnet, dass** es im Wesentlichen im Einsatz der aufeinanderfolgenden Schritte a) bis c) und eventuell d) besteht.

7. Verfahren nach einem der Ansprüche 2 bis 5, **dadurch gekennzeichnet, dass** es umfasst bzw. im Wesentlichen besteht im Einsatz der aufeinanderfolgenden Schritte a) bis c), eventuell d) und e) bis h) und eventuell i).

8. Verfahren nach Anspruch 7, **dadurch gekennzeichnet, dass** das Lösungsmittel aus der Familie der Alkohole unter Butanol, t-Butanol und Isopropanol ausgewählt ist, und dass das Lösungsmittel vorteilhafterweise in Isopropanol besteht.

9. Verfahren nach Anspruch 7 oder 8, **dadurch gekennzeichnet, dass** die Heiß-Solubilisierung bei einer Temperatur zwischen 70 und 80 °C eingesetzt wird.

10. Verfahren nach einem der Ansprüche 1 bis 9, **dadurch gekennzeichnet, dass** das mindestens eine Ammoniumsalz ausgewählt ist unter Ammoniumchlorid, Ammoniumsulfat, Ammoniumcarbonat, Ammoniumformiat und ihren Gemischen, und/oder, vorteilhafterweise und, das mindestens eine Borhydrid von alkalischem und/oder erdalkalischem Metall ausgewählt ist unter Lithium-Borhydrid, NatriumBorhydrid und ihren Gemischen.

11. Verfahren nach einem der Ansprüche 1 bis 10, **dadurch gekennzeichnet, dass** das mindestens ein Ammoniumsalz in Ammoniumcarbonat besteht, und das mindestens eine Borhydrid von alkalischem und/oder erdalkalischem Metall in NatriumBorhydrid besteht.

## Claims

1. A method for obtaining borazane, **characterized in that** it comprises the implementation of the successive steps below:
a) obtaining a solution of borazane in a solvent consisting of tetrahydrofuran containing less than 100 ppm of water, advantageously less than 10 ppm of water; said borazane having been synthesized by reaction of at least one ammonium salt with at least one alkali and/or alkaline earth metal borohydride in said solvent or said borazane having been dissolved in said solvent, after having been synthesized by reaction of at least one ammonium salt with at least one alkali and/or alkaline earth metal borohydride in tetrahydrofuran containing less than 100 ppm of water, advantageously less than 10 ppm of water;
b) precipitation of the borazane by addition to said solution of a non-solvent of borazane, containing less than 100 ppm of water, advantageously less than 10 ppm of water, and selected from the chlorinated solvents, the fluorinated solvents, the linear, branched and cyclic alkanes, and mixtures thereof;
c) recovery, advantageously by filtration, of said precipitated borazane;
d) possible drying of said recovered precipitated borazane.

2. The method as claimed in claim 1, **characterized in that** it further comprises:
e) hot dissolution, at a temperature lower than the decomposition temperature of the borazane, of said recovered precipitated borazane, advantageously dried, in a solvent from the alcohol family, having a molecular weight greater than or equal to 60 g/mol and containing less than 100 ppm of water, advantageously less than 10 ppm of water;
f) hot removal, advantageously by filtration, of impurities insoluble in said solvent;
g) precipitation of the borazane dissolved in said solvent by cooling;
h) recovery, advantageously by filtration, of the precipitated borazane; and
i) possible drying of said recovered precipitated borazane.

3. The method as claimed in claim 1 or 2, **characterized in that** it comprises, for obtaining said solution of borazane:
a₁) synthesis of the borazane, by reaction, in tetrahydrofuran containing less than 100 ppm of water, advantageously less than 10 ppm of water, of at least one ammonium salt with at least one alkali and/or alkaline earth metal borohydride, and
a₂) removal, advantageously by filtration, of the solids from the reaction medium.

4. The method as claimed in claim 3, **characterized in that** it further comprises, for obtaining said solution of borazane:
a₃) concentration, advantageously by evaporation of part of the solvent, of said filtered reaction medium.

5. The method as claimed in any one of claims 1 to 4, **characterized in that** said non-solvent consists of dichloromethane.

6. The method as claimed in any one of claims 1 and 3 to 5, **characterized in that** it essentially consists in the implementation of the successive stages a) to c) and possibly d).

7. The method as claimed in any one of claims 2 to 5, **characterized in that** it comprises, or indeed **in that** it essentially consists in the implementation of the successive stages a) to c), possibly d), and e) to h) and possibly i).

8. The method as claimed in claim 7, **characterized in that** said solvent from the alcohol family is selected from butanol, *t*-butanol and isopropanol; **in that** said solvent advantageously consists of isopropanol.

9. The method as claimed in claim 7 or 8, **characterized in that** said hot dissolution is performed at a temperature lying between 70 and 80°C.

10. The method as claimed in any one of claims 1 to 9, **characterized in that** said at least one ammonium salt is selected from ammonium chloride, ammonium sulfate, ammonium carbonate, ammonium formate and mixtures thereof and/or, advantageously and, said at least one alkali and/or alkaline earth metal borohydride is selected from lithium borohydride, sodium borohydride and mixtures thereof.

11. The method as claimed in any one of claims 1 to 10, **characterized in that** said at least one ammonium salt consists of ammonium carbonate and said at least one alkali and/or alkaline earth metal borohydride consists of sodium borohydride.
